(19) Europäisches Patentamt
European Patent Office
Office européen des brevets

(11) Veröffentlichungsnummer: **0 208 847**
**B1**

# EUROPÄISCHE PATENTSCHRIFT

(45) Veröffentlichungstag der Patentschrift:
27.06.90

(51) Int. Cl.⁵: **H02P 7/62**

(21) Anmeldenummer: 86105590.3

(22) Anmeldetag: 23.04.86

(54) Einrichtung zur Momenten-Istwertbildung bei einer dreiphasigen Synchronmaschine mit Stromblockspeisung.

(30) Priorität: 06.05.85 DE 3516208

(43) Veröffentlichungstag der Anmeldung:
21.01.87 Patentblatt 87/4

(45) Bekanntmachung des Hinweises auf die Patenterteilung:
27.06.90 Patentblatt 90/26

(84) Benannte Vertragsstaaten:
DE IT SE

(56) Entgegenhaltungen:
EP-A- 0 065 614
DE-A- 2 915 987

(73) Patentinhaber: Siemens Aktiengesellschaft,
Wittelsbacherplatz 2, D-8000 München 2(DE)

(72) Erfinder: Steinigeweg, Rolf-Jürgen, Dipl.-Ing.,
Anna-Herrmann-Strasse 46,
D-8522 Herzogenaurach(DE)

ACTORUM AG

**Beschreibung**

Die Erfindung bezieht sich auf eine Einrichtung zur Momenten-Istwertbildung bei einer dreiphasigen Synchronmaschine mit Stromblockspeisung, wobei die in ihrer Polarität alternierenden Stromblöcke jeweils einen Stromflußwinkel von 120° el aufweisen, wobei zwischen den alternierenden Stromblöcken jeweils eine Lücke von 60° el besteht und wobei der Anstieg und Abfall jedes Stromblockes jeweils innerhalb einer vorgegebenen Verzögerungszeit erfolgt.

Synchronmaschinen mit trapezförmiger elektromotorischer Kraft (EMK) erzeugen bei Speisung mit blockförmigen Strömen ein konstantes Moment (s. z.B. EP-A 0 065 614). Da die zur Leistungsbildung beitragenden Spannungen und Ströme aller drei Phasen gleich sind, ist der resultierende Momenten-Istwert proportional dem Blockstrom. Weil in jeder Phase der Strom für zweimal 60° el pro Periode zu Null wird, muß die Blockstrommessung bei mindestens zwei Phasen erfolgen. Eine Blockstrommessung in nur zwei Phasen bedingt zwar einen geringen Aufwand bei den Stromerfassungselementen, jedoch tritt dabei das folgende technische Problem auf.

In der Praxis ergeben sich nämlich keine exakt rechteckförmigen Stromblöcke, sondern es tritt eine Verzögerungszeit für Anstieg und Abfall jedes Stromblockes auf. Das muß bei Momenten-Istwertbildungen berücksichtigt werden. Es führt nämlich zu einem Meßfehler, wenn mit dem Abschalten des Blockstroms in der Phase R bzw. S der Blockstrom der Phase S bzw. R unkorrigiert ausgewertet wird, da dieser Blockstrom in seinem Anstieg eine Verzögerung aufweist, so daß ein zu geringer Stromwert gemessen wird.

Aufgabe der Erfindung ist es, eine Einrichtung der eingangs genannten Art so auszubilden, daß eine genaue Momenten-Istwertbildung durch Messung des Blockstromes in zwei Phasen möglich ist.

Gemäß der Erfindung wird diese Aufgabe dadurch gelöst, daß periodisch den jeweiligen Strömen jedes Stromblockes entsprechende Meßsignale für zwei Phasen gebildet werden, daß während 240° el der Betrag jeweils eines der Meßsignale für die jeweils zweite Hälfte jedes Stromblockes und daß während der übrigen 120° el der Betrag der Summe der Meßsignale beider Phasen ein Referenzsignal für den jeweiligen Momenten-Istwert darstellt.

Durch die Summenbildung der Meßsignale wird eine weitgehende Kompensation des eingangs geschilderten Meßfehlers ermöglicht.

Eine erste vorteilhafte Ausbildung der Erfindung ist dadurch gekennzeichnet, daß jedes Referenzsignal über eine Schaltstufe jeweils unmittelbar oder invertiert an eine das Referenzsignal generierende Addierschaltung zuführbar ist. Dadurch ergibt sich eine ausgesprochen einfache Schaltungsanordnung.

Dadurch, daß der Beginn und das Ende jedes Stromblockes durch einen Rotorlagegeber bestimmbar ist und daß die Schaltstufe mit den Lagesignalen des Rotorlagegebers synchronisierbar ist, läßt sich die Umschaltung der Blockstrommessung zwischen den beiden Phasen in äußerst einfacher Weise realisieren.

Wenn je nach Drehrichtung des Momentes der Synchronmaschine dem Referenzsignal eine vorgegebene Polarität einprägbar ist, kann dem resultierenen Referenzsignals nicht nur die Größe des Momenten-Istwertes, sondern auch die Drehrichtung der Maschine entnommen werden.

Ein Ausführungsbeispiel der Erfindung ist in der Zeichnung dargestellt und wird im folgenden näher erläutert. Dabei zeigen:

Fig. 1 die Maschinenanordnung,
Fig. 2 einige signifikante Signale in ihrem zeitlichen Verlauf und
Fig. 3 eine Auswerteschaltung.

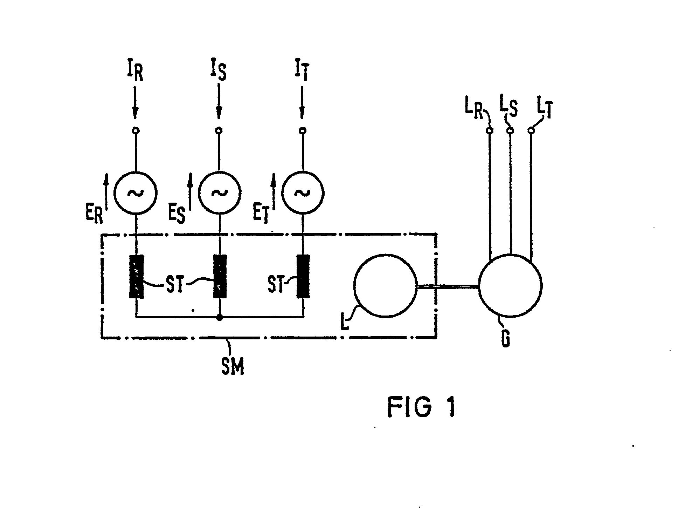

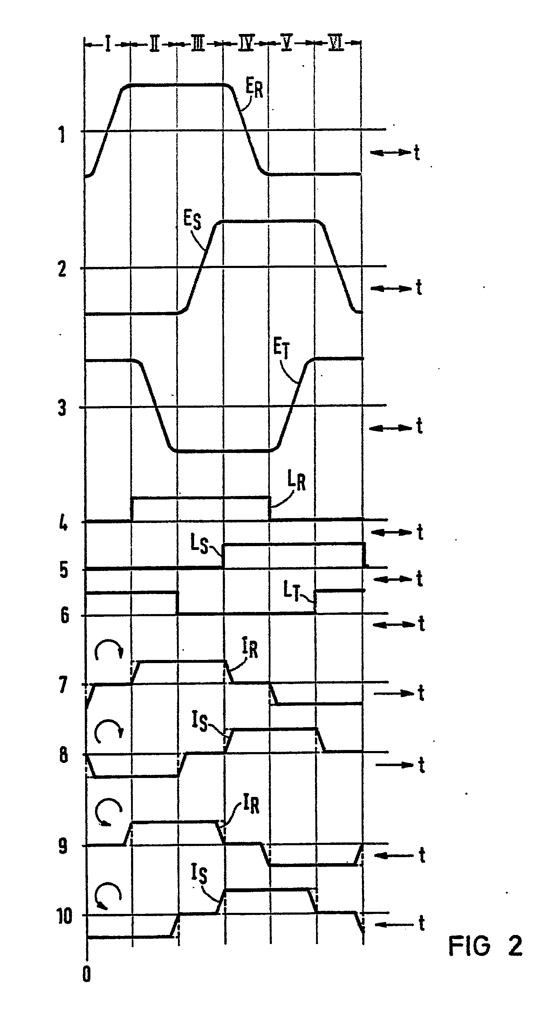

In der Darstellung gemäß Fig. 1 ist eine Synchronmaschine SM gestrichelt angedeutet, die eine dreiphasige Ständerwicklung ST aufweist, wobei dieser eine elektromotorische Kraft EMK eingeprägt wird, die in der Darstellung für die Phasen R, S und T als elektromotorische Kraft $E_R$, $E_S$ und $E_T$ jeweils durch einen Pfeil angedeutet ist. Jede Phase wird von einem Strom $I_R$, $I_S$ bzw. $I_T$ (ebenfalls jeweils durch einen Pfeil symbolisiert) gespeist. Der zeitabhängige Verlauf der elektromotorischen Kräfte $E_R$, $E_S$ und $E_T$ sowie der Ströme $I_R$, $I_S$ und $I_T$ ist in Fig. 2 dargestellt, auf die im folgenden noch eingegangen wird.

Die Synchronmaschine SM weist einen Läufer L auf, an dem ein mechanisches Moment abgegriffen werden kann und der starr mit einem Rotorlagegeber G verbunden ist. Dieser Rotorlagegeber G erzeugt drei jeweils um 120° gegeneinander versetzte binäre Lagesignale $L_R$, $L_S$ und $L_T$, die, wie im folgenden noch erläutert wird, mit idealisierten Blöcken der Strömen $I_R$, $I_S$ und $I_T$ synchronisiert sind.

In der Darstellung gemäß Fig. 2 sind für eine Periode zehn Zeitdiagramme 1 bis 10 von zueinander zeitlich synchronen signifikanten Signalen gezeigt. Die Zeitachse ist jeweils mit t gekennzeichnet, der Zeitablauf ist durch zugeordnete Pfeile (einfach bzw. doppelt) angegeben.

Die Periode ist in Abschnitte I-VI von jeweils 60° el eingeteilt. Sofern die Abschnitte I-VI in aufsteigender Folge durchlaufen werden, liegt ein Rechtslauf der Maschine vor, sofern die Abschnitte I-VI in fallender Folge durchlaufen werden, liegt ein Linkslauf der Maschine vor. Das Signal 1 zeigt den zeitlichen Verlauf der elektromotorischen Kraft $E_R$. Die elektromotorische Kraft $E_R$ weist für den Fall des Rechtslaufs im Abschnitt I einen ansteigenden Verlauf auf, bleibt während der Abschnitte II und III konstant und fällt während des Abschnittes IV auf einen Wert, der demjenigen der Abschnitte II und III gleich, jedoch entgegengesetzt ist.

Das Diagramm 2 und das Diagramm 3 zeigen die elektromotorischen Kräfte $E_S$ und $E_T$, wobei die elektromotorische Kraft $E_S$ der elektromotorischen Kraft $E_R$ im Falle des Rechtslaufs um 120° el nacheilt und die elektromotorische Kraft $E_T$ im Falle des Rechtslaufs wiederum der elektromotorischen Kraft $E_S$ um 120° el nacheilt.

Zur Erfassung des Momenten-Istwertes werden die Ströme $I_R$ und $I_S$ hinsichtlich ihrer jeweiligen Stromblöcke bewertet. Die Ströme $I_R$ und $I_S$ für Rechtslauf (durch einen rechtswendig gebogenen Pfeil angedeutet) sind in den Diagrammen 7 und 8 dargestellt, die Ströme $I_R$ und $I_S$ für Linkslauf (durch einen linkswendig gebogenen Pfeil symbolisiert) sind in den Diagrammen 9 und 10 gezeigt. Es zeigt sich, daß die Ströme $I_R$ und $I_S$ von einem idealisierten Verlauf, der in den Diagrammen 7 bis 10 jeweils gestrichelt dargestellt ist, abweichen, indem jeder Stromblock mit einer gewissen Verzögerungszeit ansteigt bzw. abfällt. Zu den Stromblöcken der idealisierten Ströme sind die in den Diagrammen 4, 5 und 6 dargestellten binären Lagesignale $L_R$, $L_S$ und $L_T$ synchronisiert. Die Lagesignale $L_R$, $L_S$ und $L_T$ sind demzufolge ebenfalls jeweils um 120° el gegeneinander versetzt.

Zur Bildung des Referenzsignals für den jeweiligen Momenten-Istwert sind die Blockströme der Phasen R und S für Rechtslauf - im Sinne eines rechtsdrehenden Momentes - folgendermaßen auszuwerten.

Während des Abschnittes I wird die Summe der Ströme $I_R$ und $I_S$ gebildet, während des Abschnittes II wird der Strom $I_S$ gewertet, während des Abschnittes III wird der Strom $I_R$ invertiert gewertet, während des Abschnittes IV wird die Summe der Ströme $I_R$ und $I_S$ invertiert gewertet, während des Abschnittes V wird der Strom $I_S$ invertiert gewertet und während des Abschnittes VI wird der Strom $I_R$ gewertet. Das Referenzsignal zeigt dabei durch ein negatives Vorzeichen den Rechtslauf an. Der Betrag des Referenzsignals ist jeweils dem Momenten-Istwert der Maschine proportional.

Für Linkslauf - im Sinne eines linksdrehenden Momentes - ergeben sich folgende Bedingungen. Während des Abschnittes VI wird die Summe der Ströme $I_R$ und $I_S$ invertiert gewertet, während des Abschnittes V wird der Wert des Stromes $I_R$ invertiert gewertet, während des Abschnittes IV wird der Strom $I_S$ gewertet, während des Abschnittes III wird die Summe der Ströme $I_R$ und $I_S$ gewertet, während des Abschnittes II wird der Strom $I_R$ gewertet und während des Abschnittes I wird der Strom $I_S$ invertiert gewertet. Das resultierende Referenzsignal zeigt dabei durch ein positives Vorzeichen den Linkslauf an. Der Betrag des Referenzsignals ist ebenso wie beim Rechtslauf ein Maß für den aktuellen Momenten-Istwert.

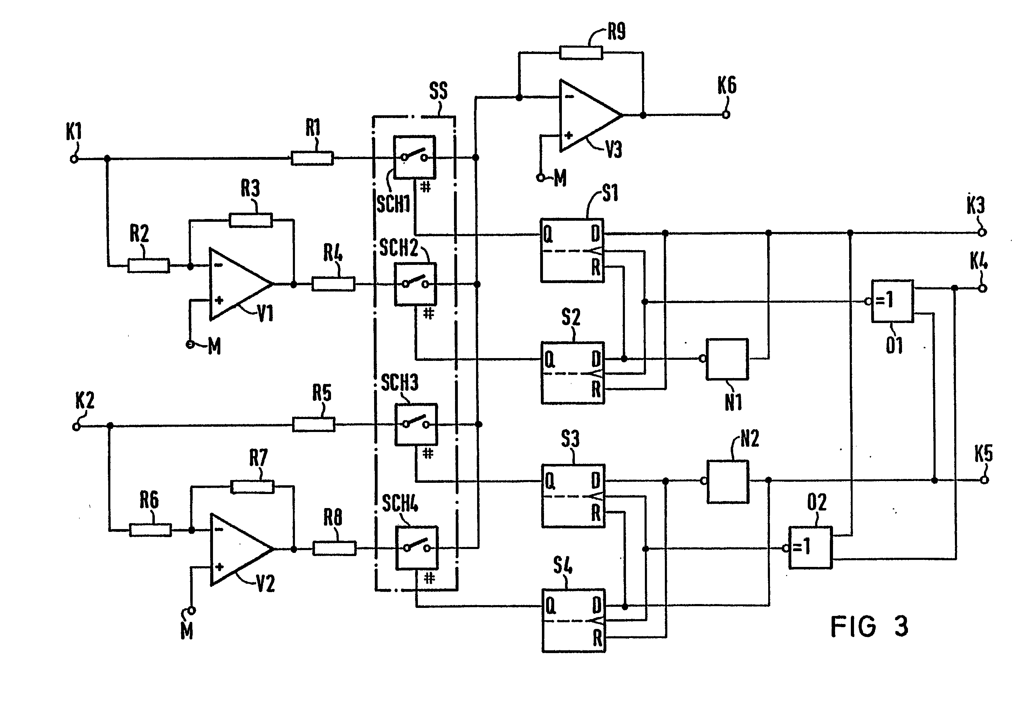

Eine Schaltungsanordnung, die eine derartige Wertung ermöglicht, ist in der Darstellung gemäß Fig. 3 gezeigt. Dabei werden über Klemmen K1 und K2 den Strömen $I_R$ und $I_S$ entsprechende Meßsignale der Schaltungsanordnung zugeführt, über Klemmen K3, K4 und K5 werden die Lagesignale $L_R$, $L_S$ und $L_T$ des Rotorlagegebers G zugeleitet und über eine Klemme K6 ist das dem Momenten-Istwert jeweils entsprechende Referenzsignal abgreifbar.

Die Schaltungsanordnung ist dabei so ausgebildet, daß die den Strömen $I_R$ und $I_S$ jeweils entsprechenden Meßsignale über einen Widerstand R1 bzw. R5 direkt an eine Schaltstufe SS (gestrichelt dargestellt) führbar sind, bzw. diese Meßsignale invertiert über Widerstände R4 bzw. R8 der Schaltstufe SS zuführbar sind. Die Widerstände R1, R4, R5 bzw. R8 sind dabei gleich groß.

Die Inversion erfolgt für das Meßsignal für den Strom $I_R$ über eine Inversionsstufe, die aus einem Operationsverstärker V1 besteht, dessen nicht invertierender Eingang mit Massepotential M beaufschlagt ist und dessen invertierender Eingang zum einen mit der Klemme K1 über einen Widerstand R2 verbunden ist und zum anderen über einen Widerstand R3 mit dem Ausgang des Operationsverstärkers V1 bzw. dem Widerstand R4 verbunden ist. Die Widerstände R2 und R3 sind dabei gleich groß. Demzufolge ergibt sich eine reine Inversion (Verstärkung 1) des von der Klemme K1 kommenden Meßsignals.

In entsprechender Weise erfolgt die Inversion des dem Strom $I_S$ entsprechenden Meßsignals mit Hilfe eines Operationsverstärkers V2, dessen nicht invertierender Eingang ebenfalls mit Massepotential M verbunden ist und dessen invertierender Eingang über einen Widerstand R6, dessen Größe derjenigen des Widerstandes R2 entspricht, mit der Klemme K2 verbunden ist. Der Ausgang des Operationsverstärkers V2, der an den Widerstand R8 führt, ist über einen Widerstand R7, dessen Wert demjenigen des Widerstandes R3 entspricht, auf den invertierenden Eingang des Operationsverstärkers V2 rückgekoppelt.

Die Schaltstufe SS beinhaltet vier elektronische Schalter SCH1, SCH2, SCH3 und SCH4. Dem Schalter SCH1 wird das nicht invertierte dem Strom $I_R$ entsprechende Meßsignal zugeführt, dem Schalter SCH2 wird das invertierte, dem Strom $I_R$ entsprechende Meßsignal zugeführt, dem Schalter SCH3 wird das nicht invertierte, dem Strom $I_S$ entsprechende Meßsignal zugeführt und dem Schalter SCH4 wird das invertierte, dem Strom $I_S$ entsprechende Meßsignal zugeleitet. Die Ausgänge der Schalter SCH1, SCH2, SCH3 und SCH4 führen an den invertierenden Eingang eines Operationsverstärkers V3, dessen nicht invertierender Eingang ebenfalls mit Massepotential M beaufschlagt ist. Der Ausgang des Operationsverstärkers V3 ist über einen Widerstand R9, dessen Wert demjenigen der Widerstände R1, R4, R5 bzw. R8 entspricht, mit dem invertierenden Eingang des Operationsverstärkers V3 verbunden.

Der Operationsverstärker V3 stellt zusammen mit den Widerständen R1, R4, R5, R8 und R9 eine invertierende Addierstufe dar, so daß die oben beschriebene Verknüpfung der den Strömen $I_R$ bzw. $I_S$ entsprechenden Meßsignale möglich ist.

Um eine Synchronisation dieser Verknüpfung sicher so zu gewährleisten, daß als Ströme $I_R$ und $I_S$ die Blockströme erfaßt werden, ist eine Schaltungsanordnung bestehend aus Speichergliedern S1, S2, S3 und S4 sowie NICHT-Gliedern N1 und N2 und ODER-Gliedern O1 und O2, vorgesehen. Bei den

Speichergliedern S1 bis S4 handelt es sich um D-Speicherglieder mit R-Eingang.

Diese Anordnung von binären Verknüpfungsgliedern ist so ausgebildet, daß dann, wenn ein Rechtslauf der Synchronmaschine SM vorliegt, im Abschnitt I die Schalter SCH2 und SCH4 geschlossen sind, daß im Abschnitt II nur der Schalter SCH4 geschlossen ist, daß im Abschnitt III nur der Schalter SCH1 geschlossen ist, daß im Abschnitt IV der Schalter SCH1 und der Schalter SCH3 geschlossen sind, daß im Abschnitt V nur der Schalter SCH3 geschlossen ist und daß im Abschnitt VI nur der Schalter SCH2 geschlossen ist.

Für Linkslauf ergeben sich folgende Bedingungen. Im Abschnitt I ist nur der Schalter SCH3 geschlossen, im Abschnitt II ist nur der Schalter SCH2 geschlossen, im Abschnitt III sind die Schalter SCH2 und SCH4 geschlossen, im Abschnitt IV ist nur der Schalter SCH4 geschlossen, im Abschnitt V ist nur der Schalter SCH1 geschlossen und im Abschnitt VI sind die Schalter SCH1 und SCH3 geschlossen.

Bezugszeichenliste

| Synchronmaschine | SM |
| Ständerwicklung | ST |
| elektromagnetische Kraft | EMK |
| elektromotorische Kraft | $E_R$ |
| elektromotorische Kraft | $E_S$ |
| elektromotorische Kraft | $E_T$ |
| Läufer | L |
| Rotorlagegeber | G |
| binäres Lagesignal | $L_R$ |
| binäres Lagesignal | $L_S$ |
| binäres Lagesignal | $L_T$ |
| Klemme | K3 |
| Klemme | K4 |
| Klemme | K5 |
| Klemme | K6 |
| Schaltstufe | SS |
| Operationsverstärker | V1 |
| Massepotential | M |
| elektronischer Schalter | SCH1 |
| elektronischer Schalter | SCH2 |
| elektronischer Schalter | SCH3 |
| elektronischer Schalter | SCH4 |
| Speicherglied | S1 |
| Speicherglied | S2 |
| Speicherglied | S3 |
| Speicherglied | S4 |
| NICHT-Glied | N1 |
| NICHT-Glied | N2 |
| ODER-Glied | O1 |
| ODER-Glied | O2 |

**Patentansprüche**

1. Einrichtung zur Momenten-Istwertbildung bei einer dreiphasigen Synchronmaschine (SM) mit Stromblockspeisung, wobei die in ihrer Polarität alternierenden Stromblöcke jeweils einen Stromflußwinkel von 120° el aufweisen, wobei zwischen den alternierenden Stromblöcken jeweils eine Lücke von 60° el besteht und wobei der Anstieg und Abfall jedes Stromblockes jeweils innerhalb einer vorgegebenen Verzögerungszeit erfolgt, **dadurch gekennzeichnet,** daß periodisch den jeweiligen Strömen ($I_R$, $I_S$, $I_T$) jedes Stromblockes entsprechende Meßsignale für zwei Phasen (R, S) gebildet werden, daß während 240° el der Betrag jeweils eines der Meßsignale für die jeweils zweite Hälfte jedes Stromblockes und daß während der übrigen 120° el der Betrag der Summe der Meßsignale beider Phasen ein Referenzsignal für den jeweiligen Momenten-Istwert darstellt.

2. Einrichtung nach Anspruch 1, **dadurch gekennzeichnet,** daß jedes Referenzsignal über eine Schaltstufe (SS) jeweils unmittelbar oder invertiert an eine das Referenzsignal generierende Addierschaltung zuführbar ist.

3. Einrichtung nach Anspruch 1 oder 2, **dadurch gekennzeichnet,** daß der Beginn und das Ende jedes Stromblockes durch einen Rotorlagegeber (G) bestimmbar ist und daß die Schaltstufe (SS) mit den Lagesignalen ($L_R$, $L_S$, $L_T$) des Rotorlagegebers (G) synchronisierbar ist.

4. Einrichtung nach Anspruch 1, 2 oder 3, **dadurch gekennzeichnet,** daß je nach Drehrichtung der Synchronmaschine (SM) dem Referenzsignal eine vorgegebene Polarität einprägbar ist.

**Claims**

1. A device for the formation of the actual value of the torque in a three-phase synchronous machine (SM) with current block supply, wherein the current blocks, alternating in their polarity, have in each case a current flow angle of 120° el., wherein between the alternating current blocks in each case a gap of 60° el. exists and wherein the rise and the fall of each current block occurs in each case within a predetermined delay time, characterised in that periodically, measuring signals for two phases (R, S) are formed, corresponding to the respective currents ($I_R$, $I_S$, $I_T$) of each current block, in that during 240° el. the magnitude in each case of one of the measuring signals for the respective second half of each current block and in that during the remaining 120° el. the magnitude of the sum of the measuring signals of both phases represent a reference signal for the respective actual torque value.

2. A device according to claim 1, characterised in that each reference signal is able to be supplied by way of a switching stage (SS) in each case directly or inverted to an adding circuit generating the reference signal.

3. A device according to claim 1 or 2, characterised in that the beginning and the end of each current block is able to be determined by a shaft position encoder (G) and in that the switching stage (SS) is able to be synchronised with the position signals ($L_R$, $L_S$, $L_T$) of the shaft position encoder (G).

4. A device according to claim 1, 2 or 3, characterised in that depending on the rotational direction of the synchronous machine (SM) a predetermined polarity can be impressed upon the reference signal.

## Revendications

1. Dispositif de formation de la valeur réelle d'un moment dans une machine synchrone triphasée (SM) comportant une alimentation par blocs de courant, et dans lequel les blocs de courant, qui ont des polarités alternées, possèdent respectivement un angle de flux égal à 120°, un intervalle vide de 60 degrés électriques est présent respectivement entre les blocs de courant alternés, et la croissance et la décroissance de chaque bloc de courant s'effectuent respectivement pendant un intervalle de temps de retard prédéterminé, caractérisé par le fait que des signaux de mesure correspondant respectivement aux courants respectifs ($I_R$, $I_S$, $I_T$) de chaque bloc de courant sont formés périodiquement pour deux phases (R, S), que pendant 240 degrés électriques, la valeur respectivement de l'un des signaux de mesure représente un signal de référence pour la seconde moitié respective de chaque bloc de courant et que pendant les 120 autres degrés électriques, la valeur de la somme des signaux de mesure des deux phases représente un signal de référence pour la valeur réelle respective du moment.

2. Dispositif suivant la revendication 1, caractérisé par le fait que chaque signal de référence peut être envoyé par l'intermédiaire d'un étage de commutation (SS), respectivement directement ou en étant inversé, à un circuit additionneur produisant le signal de référence.

3. Dispositif suivant la revendication 1 ou 2, caractérisé par le fait que le début et la fin de chaque bloc de courant peuvent être déterminés par un capteur (G) de la position du rotor et que l'étage de commutation (SS) peut être synchronisé avec les signaux de charge ($L_R$, $L_S$, $L_T$) du capteur (G) de la position du rotor.

4. Dispositif suivant la revendication 1, 2 ou 3, caractérisé par le fait qu'une polarité prédéterminée peut être appliquée au signal de référence, en fonction du sens de rotation de la machine synchrone (SM).

FIG 1

FIG 2

FIG 3